# EUROPEAN PATENT APPLICATION

(11) **EP 4 848 668 A1**
(43) Date of publication of application: **02.12.2026**
(21) Application number: 26179948.0
(22) Date of filing: 20.05.2026
(51) Int. Cl.: H04L 12/40

(54) **METHOD AND APPARATUS FOR COMMUNICATING OVER A NETWORK**

(30) Priority: 29.05.2025 CN 202510707899
(71) Applicant: NXP USA, Inc., Austin, TX 78735 (US)
(72) Inventor: Zhang, Hang, 556AG Eindhoven (NL); Luo, Dong, 5656AG Eindhoven (NL); Yi, Kailang, 5656AG Eindhoven (NL); Ma, Yuxin, 5656AG Eindhoven (NL)
(74) Representative: Schwarzweller, Thomas

(57) **Abstract**

A method for communicating over a Controller Area Network Extended data-field Length, CAN-XL, bus, includes generating a CAN-XL data frame including an arbitration field. The generating includes filling in the arbitration field of the CAN-XL data frame using an initial priority identifier. The method further includes updating the arbitration field of the CAN-XL data frame with an updated priority identifier. The method further includes determining, using the updated priority identifier in the arbitration field of the CAN-XL data frame, whether the CAN-XL data frame gains access to the CAN-XL bus. The method further includes sending the CAN-XL data frame for transmission over the CAN-XL bus in response to the updated priority identifier in the arbitration field of the CAN-XL data frame being determined as indicative that the CAN-XL data frame gains access to the CAN-XL bus.

## Description

### BACKGROUND

The present disclosure relates to an apparatus and a method for in-vehicle communications basing on CAN-XL (Controller Area Network Extended data-field Length) backbone networks.

In a zonal vehicle architecture, there may be units that communicate with each other by transmitting Ethernet protocol messages. Backbone networks in the zonal vehicle architecture have been built basing on CAN-XL communications technology. There is a need for the CAN-XL backbone network to carry communications from/to Ethernet units.

### SUMMARY

This summary is provided to introduce a selection of concepts in a simplified form that are further described below in the Detailed Description. This summary is not intended to identify key or essential features of the claimed subject matter, nor is it intended to be used to limit the scope of the claimed subject matter.

In one embodiment, a method for communicating over a Controller Area Network Extended data-field Length, CAN-XL, bus, includes generating a CAN-XL data frame including an arbitration field. The generating includes filling in the arbitration field of the CAN-XL data frame using an initial priority identifier. The method further includes updating the arbitration field of the CAN-XL data frame with an updated priority identifier. The method further includes determining, using the updated priority identifier in the arbitration field of the CAN-XL data frame, whether the CAN-XL data frame gains access to the CAN-XL bus. The method further includes sending the CAN-XL data frame for transmission over the CAN-XL bus in response to the updated priority identifier in the arbitration field of the CAN-XL data frame being determined as indicative that the CAN-XL data frame gains access to the CAN-XL bus.

In another embodiment, there is provided an apparatus for communicating over a Controller Area Network Extended data-field Length, CAN-XL, bus. The apparatus is configured to generate a CAN-XL data frame which includes an arbitration field, including filling in the arbitration field of the CAN-XL data frame using an initial priority identifier. The apparatus is also configured to update the arbitration field of the CAN-XL data frame with an updated priority identifier. The apparatus is further configured to use the updated priority identifier in the arbitration field of the CAN-XL data frame to determine whether the CAN-XL data frame gains access to the CAN-XL bus. The apparatus is configured to send the CAN-XL data frame for transmission over the CAN-XL bus in response to the updated priority identifier in the arbitration field of the CAN-XL data frame being determined as indicative that the CAN-XL data frame gains access to the CAN-XL bus.

### BRIEF DESCRIPTION OF THE DRAWINGS

So that the manner in which the above recited features of the present disclosure can be understood in detail, a more detailed description of the disclosure may be had by reference to embodiments, some of which are illustrated in the appended drawings. The appended drawings illustrate only typical embodiments of the disclosure and should not limit the scope of the disclosure, as the disclosure may have other equally effective embodiments. The drawings are for facilitating an understanding of the disclosure and thus are not necessarily drawn to scale. Advantages of the subject matter claimed will become apparent to those skilled in the art upon reading this description in conjunction with the accompanying drawings, in which like reference numerals have been used to designate like elements, and in which:
Fig. 1 is a block diagram of a zonal vehicle architecture based on CAN-XL backbone network;
Fig. 2 is a structural diagram of an Ethernet data frame;
Fig. 3 is a structural diagram of a CAN-XL data frame;
Fig. 4 is a flow diagram of a method for updating the priority ID of the CAN-XL data frame according to an embodiment;
Fig. 5 shows timing sections of the queued-time duration; and
Fig. 6 shows an example of a table mapping section indexes with priority increases.

### DETAILED DESCRIPTION

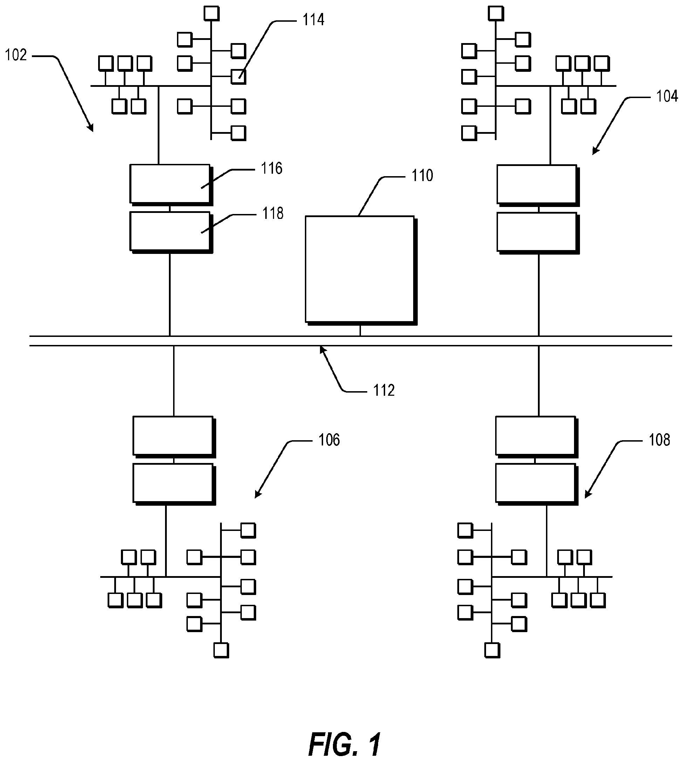

Fig. 1 shows an overview of a zonal vehicle architecture based on CAN-XL backbone network. In Fig. 1, multiple zones 102, 104, 106, and 108 are configured to communicate with each other, and also with a central processing system 110 over, or through, a CAN-XL (Controller Area Network Extended data-field Length) bus 112. "Zone" typically means a set of Electronic Control Units (ECUs) 114 that are physically located nearby each other, thereby distances of communications internal the zone are short, and in general, do not suffer from latencies. Zonal architecture is useful for time sensitive networking (TSN). Each zone is equipped with a zonal controller 116 which is used for communicating over the CAN-XL bus 112 the information from/into the corresponding zone.

In the embodiment of Fig. 1 which is based on CAN-XL backbone network, zonal controllers 116, typically one in each zone, communicate with each other using CAN-XL protocols. Data communicated from/into the zonal controllers 116 are transferred over the CAN-XL bus 112, and are in the unit of data frames that have been composed, or generated, using the CAN-XL protocol. Conversely, data communicated from the ECUs 114 may have already been converted to data frames in other formats, for example using Ethernet protocols. That is to say, the Ethernet data frames need to be converted into CAN-XL data frames before they can be communicated using the CAN-XL bus 112.

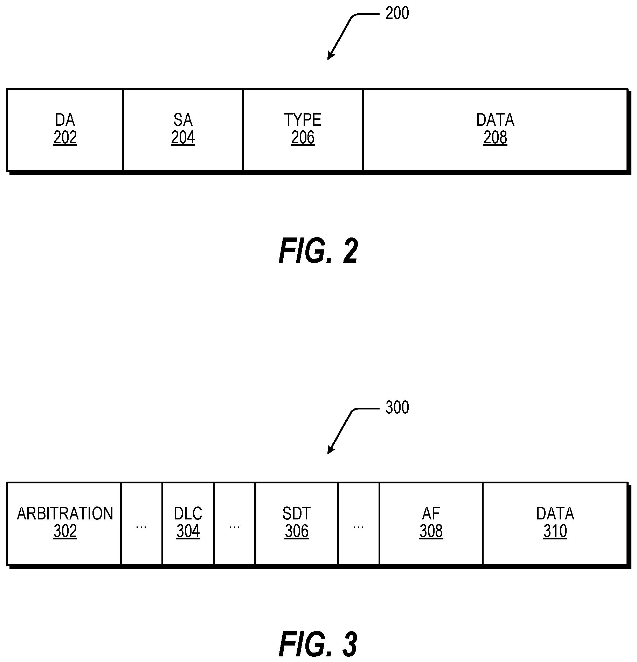

Fig. 2 illustrates a structure of a data frame according to the Ethernet protocol. The data frame 200 includes multiple fields, respectively a destination MAC address (DA) field 202, a source MAC address (SA) field 204, a type (TYPE) field 206, and a data (DATA) field 208. Fig. 2 shows only the fields 202-208 for describing the embodiment, however an Ethernet data frame may include more or other fields. Although the fields shown in Fig. 2 are neighboring one another, there may be other fields in between the illustrated fields. The DA field 202 designates the target to which the current data frame is intended to be sent. According to the Ethernet protocol, the DA field 202 designates, for example, a six-byte MAC address, and in a format of 66:55:44:33:22:11. Similarly, the SA field 204 represents the address of the source from which the current data frame is communicated. The TYPE field 206 includes data that are associated with, or indicative of, the type of the current Ethernet data frame. For example, the type data 0x800 in the TYPE field 206 indicates that the current data frame is an IPv4 Ethernet data frame. The DATA field 208 contains data for the communications of the corresponding ECU.

Fig. 3 shows a structure of a CAN-XL data frame. Similarly, the data frame 300 of Fig. 3 shows only some fields which are relevant to the description of this disclosure, and the order of the illustrated fields is exemplary but not limiting. The CAN-XL data frame 300 includes multiple control fields and a data (DATA) field 310. The multiple control fields include an arbitration field (ARBITRATION) 302, a data length code (DLC) field 304, a service data unit type (SDT) field 306, and an acceptance field (AF) 308. The ARBITRATION field 302 includes a priority ID field for identifying a priority of the current data frame for being communicated over the CAN-XL bus, against other data frames that are also waiting in the queue for accessing the CAN-XL bus. The priority ID is 11-bit long according to the CAN-XL protocol. The DLC field 304, which is typically 11-bit long, represents a length of the data contained in the current data frame. The SDT field 306 represents a type of the protocol embedded in the data field 310. The SDT field 306 is 8-bit long, and has 5 available value options 0x01-0x05 according to the CiA611-1 specification of the CAN-XL protocol. The AF field 308 is 32-bit long. The value of the AF field 308 represents differently according to the value of the SDT field 306. In an embodiment, if the SDT field 306 has a value of 0x05 which represents that the data in the data field 310 is an Ethernet frame, the AF field 308 is accordingly a truncated destination MAC address of the Ethernet frame, for example a truncated value from the DA field 202 of the Ethernet data frame of Fig. 2.

Referring back to Fig. 1, when the zonal controller 116 receives a data frame from an ECU 114, which data frame may be formatted using the conventional CAN protocol, the zonal controller 116 first converts the conventional CAN data frame into an Ethernet data frame for potential Ethernet applications. The Ethernet data frames, also referred to as source data frames, are then intended to communicate over the CAN-XL bus 112. For this reason, the zonal controller 116 generates, or produces, a CAN-XL data frame from the source data frame which is, for example, the Ethernet data frame according to an embodiment, and communicates the produced CAN-XL data frame over the CAN-XL bus 112.

In detail, the zonal controller 116 fills in the ARBITRATION field 302 of the generated CAN-XL data frame using an initial priority identifier (ID). In more details, the zonal controller 116 sets the priority ID of the ARBITRATION field 302 of the CAN-XL data frame as a default value. As will be described in detail furthermore, the ARITRATION field 302 of the CAN-XL data frame is updated from time to time with an updated priority ID, until the CAN-XL data frame is finally communicated. The DLC field 304 of the CAN-XL data frame is filled in using a data length of the received Ethernet data frame, for example the value of the length/type field of the Ethernet data frame. The SDT field 306 of the CAN-XL data frame is filled in using a predetermined value associated with a type of the source data frame. For example, in the current example where the source data frame is an Ethernet data frame, the SDT field 306 of the CAN-XL data frame is set as 0x05, which indicates that the produced CAN-XL data frame is an IEEE 802.3 (Ethernet) mapped Tunneling type.

The AF field 308 of the CAN-XL data frame, accordingly, is filled in using data selected from a destination address field of the source data frame. For example, for the example of the Ethernet data frame as the source data frame, the AF field 308 of the CAN-XL data frame is generated as a truncated destination MAC Address of the Ethernet data frame, *i.e*. data selected from the DA field 202 of the Ethernet data frame. As described above, the DA field 202 includes data in a format of for example 66:55:44:33:22:11. The AF field 308 may be filled in as 66:33:22:11, that is to say, the first, second, third, and sixth bytes of the address data of the DA field 202. However, in other embodiments where the address in the DA field 202 are formatted differently, the AF field 308 may be set as differently. In addition, the AF field 308 may be set as different bytes selected from the address data of the DA field 202, or in different orders of the selected bytes.

The zonal controller 116 may fill the source data frame into the DATA field 310 of the generated CAN-XL data frame. That is to say, the DATA field 310 may include the entirety of the received Ethernet data frame, including the DA field 202, the SA field 204, the TYPE field 206, and the DATA field 208. A CAN-XL data frame supports up to 2048 bytes of data in the DATA field 310.

Priority ID in the ARBITRATION field 302 of a CAN-XL data frame is used for arbitrating the access to, or the occupation of, the CAN-XL bus 112 by the data frame. A CAN-XL data frame with the lowest priority ID value gains access to and takes control of the CAN-XL bus to communicate, meaning that a lower priority ID value corresponds to a higher priority in the arbitration. In this embodiment, the priority ID of the produced CAN-XL data frame is periodically updated, such that the longer time a CAN-XL data frame has been waiting in the queue, the lower its priority ID value becomes.

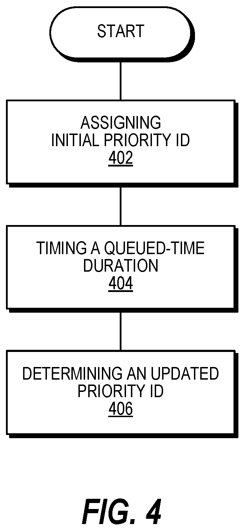

Fig. 4 is a flow diagram of a method for updating the priority ID. In step 402, the zonal controller 116 assigns an initial priority identifier (ID) as the priority ID of the ARBITRATION field 302 of the produced CAN-XL data frame. For example, the initial priority ID is assigned as *P_{default}*. The zonal controller 116 may have stored a lookup table which corresponds initial priority IDs with an index value, for example a priority code value of the source data frame, a type of the source data frame, etc. As an example, if the source data frame includes its own priority code value, such priority code value may be used as an index in looking up in the table for an associated initial priority ID, which will be used by the zonal controller 116 as the initial priority ID *P_{default}* of the produced CAN-XL data frame.

In step 404, a timer, for example within the zonal controller 116, starts to time a queued time duration, t_{used}, of the CAN-XL data frame. The queued time means a time duration the produced CAN-XL data frame have been waiting in the queue for gaining access to and taking control of the CAN-XL bus to communicate. In step 406, using the queued time of the CAN-XL data frame t_{used} which is determined at step 404, the zonal controller 116 determines an updated priority ID, *P_{updated}*, for the CAN-XL data frame. In an embodiment, the zonal controller 116 may include a lookup table which corresponds the queued time *t_{used}* with priority increases *P_{increase}*. By searching in the lookup table using the queued time *t_{used}* which has been determined in step 404 as the index, the corresponding priority increase *P_{increase}* which is associated with the queued time *t_{used}* is determined. The updated priority ID is determined as: *P_{updated}* = *P_{default}* - *P_{increase}*. A second updated priority ID *P_{updated2}*, if applicable, will be determined as *P_{updated2}* = *P_{updated}* - *P_{increase2}*, and so on.

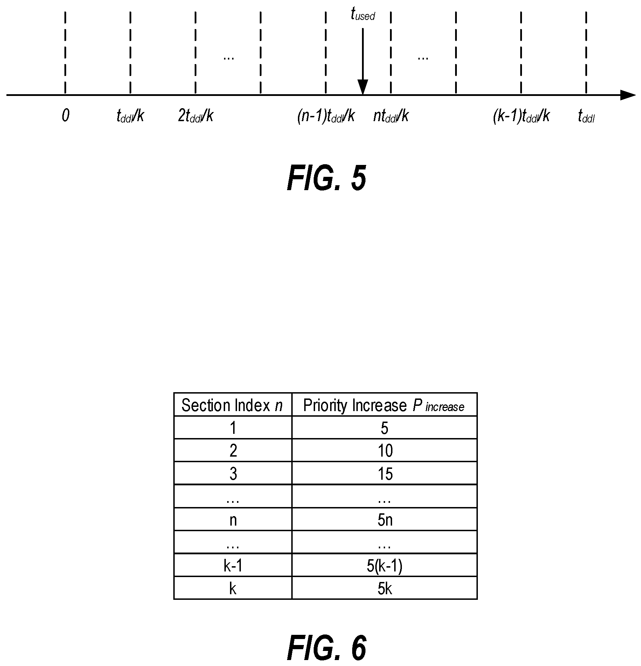

In one or more embodiments, the zonal controller 116 decides a section index, *n*, based on the queued time *t_{used}*. Fig. 5 shows a diagram for deciding the section index *n*. In the embodiment of Fig. 5, upon receiving the Ethernet data frame, a deadline time, t_{ddl}, is decided. The deadline time t_{ddl} indicates the longest wait-time which can be permitted prior to the CAN-XL data frame being communicated. The deadline time *t_{ddl}* is decided according to the type of the Ethernet data frame. In a non-limiting example, Ethernet data frames for the use in time sensitive networks (TSN) includes a 3-bit priority code point (PCP, or PRI, according to 802.1Q specification) field which represents the priority of the Ethernet data frame. Some embodiments may make use of the PCP field by assigning a corresponding deadline time *t_{ddl}* according to the PCP value.

The zonal controller 116 may have stored a mapping table in which types of the Ethernet data frame are corresponded to the deadline times *t_{ddl}*. Upon obtaining the deadline time *t_{ddl}* for the corresponding Ethernet data frame, the zonal controller 116 divides the deadline time *t_{ddl}* into a number of, *k*, sections, each section being *1*/*k* of the deadline time *t_{ddl}*. Each section represents a corresponding section index *n*. It can now be understood that, a maximum value of the section index *n* is *k*. When determining an update to the priority ID for the produced CAN-XL data frame, the zonal controller 116 decides the section of time in which the queued time *t_{used}* is with, and obtains the corresponding section index *n*. Using the section index *n*, the zonal controller 116 looks up for a corresponding priority increase *P_{increase}* from a table which corresponds the section indexes *n* with the priority increases *P_{increase}*. Fig. 6 shows an example of table according to an embodiment, in which the section indexes are mapped with the priority increases. It shall be noted that the step value of the priority increase in Fig. 6, the amount of sections *k*, and the deadline time *t_{ddl}*, are for describing the embodiments only, instead of being limiting. Their values are configurable in different implementations.

Referring back to Fig. 1, in addition to the zonal controller 116, each zone may include CAN transceiver 118 which is used for transmitting and/or receiving data between the zonal controller 116 and the CAN-XL bus 112. In transmitting the CAN-XL data frame, when the priority ID of the CAN-XL data frame indicates a highest priority among the queuing data frames, the CAN-XL data frame is transmitted from the zonal controller 116 by way of the CAN transceiver 118. In receiving the CAN-XL data frame, the zonal controller 116 receives the CAN-XL data frame from the CAN transceiver 118, and extracts the AF field of the received CAN-XL data frame. If the MAC address in the AF field matches the current zone, the zonal controller 116 keeps the data frame and perform the instructions and/or data in the data frame. Otherwise, if there is mismatch between the MAC address in the AF field and the current zone, the data frame is discarded. In various embodiments, the CAN transceiver 118 may be implemented as separated transmitter and receiver.

The described embodiments produce CAN-XL data frames out from data frames in different formats, for example the Ethernet data frames, and implements an arbitration scheme which is based on a dynamically updating priority ID of the produced CAN-XL data frame. It is appreciated that occupancy of the CAN-XL bus is balanced by allocating the data frames with increasing priorities over time. A method for communicating over a Controller Area Network Extended data-field Length, CAN-XL, bus, includes generating a CAN-XL data frame including an arbitration field. The generating includes filling in the arbitration field of the CAN-XL data frame using an initial priority identifier. The method further includes updating the arbitration field of the CAN-XL data frame with an updated priority identifier. The method further includes determining, using the updated priority identifier in the arbitration field of the CAN-XL data frame, whether the CAN-XL data frame gains access to the CAN-XL bus. The method further includes sending the CAN-XL data frame for transmission over the CAN-XL bus in response to the updated priority identifier in the arbitration field of the CAN-XL data frame being determined as indicative that the CAN-XL data frame gains access to the CAN-XL bus.

In a first aspect, there is provided a method for communicating over a Controller Area Network Extended data-field Length, CAN-XL, bus, comprising: generating a CAN-XL data frame comprising an arbitration field, the generating comprising filling in the arbitration field of the CAN-XL data frame using an initial priority identifier; updating the arbitration field of the CAN-XL data frame with an updated priority identifier; determining, using the updated priority identifier in the arbitration field of the CAN-XL data frame, whether the CAN-XL data frame gains access to the CAN-XL bus; and in response to the updated priority identifier in the arbitration field of the CAN-XL data frame being determined as indicative that the CAN-XL data frame gains access to the CAN-XL bus, sending the CAN-XL data frame for transmission over the CAN-XL bus.

In some embodiments, the method further comprises: receiving a source data frame; and wherein generating the CAN-XL data frame comprises generating the CAN-XL data frame using the source data frame.

In some embodiments, the CAN-XL data frame comprises a service data unit type, SDT, field; and wherein generating the CAN-XL data frame comprises filling in the SDT field of the CAN-XL data frame using a predetermined value associated with a type of the source data frame.

In some embodiments, filling in the SDT field of the CAN-XL data frame using the predetermined value comprises: in response to the source data frame being an Ethernet data frame, setting the SDT field of the CAN-XL data frame as 0x05.

In some embodiments, ein the CAN-XL data frame comprises a data length code, DLC, field; and wherein generating the CAN-XL data frame comprises filling in the DLC field of the CAN-XL data frame using a data length of the source data frame.

In some embodiments, the CAN-XL data frame comprises an acceptance field, AF; and wherein generating the CAN-XL data frame comprises filling in the AF field of the CAN-XL data frame using data selected from a destination address field of the source data frame.

In some embodiments, filling in the AF field of the CAN-XL data frame using data selected from the destination address field of the source data frame comprises: in response to the destination address field of the source data frame comprising first to sixth bytes of address data, filling in the AF field of the CAN-XL data frame using the first, second, third, and sixth bytes of address data of the destination address field of the source data frame.

In some embodiments, the CAN-XL frame comprises a data field, and wherein generating the CAN-XL data frame comprises filling the source data frame into the data field of the CAN-XL data frame.

In some embodiments, filling in the arbitration field of the CAN-XL data frame using the initial priority identifier comprises: determining a value of the initial priority identifier associated with a priority code value of the source data frame. In some embodiments, updating the arbitration field of the CAN-XL data frame with the updated priority identifier comprises: determining a queued time of the CAN-XL data frame; and determining the updated priority identifier associated with the queued time.

In a second aspect, there is provided an apparatus for communicating over a Controller Area Network Extended data-field Length, CAN-XL, bus, wherein the apparatus is configured to: generate a CAN-XL data frame comprising an arbitration field, comprising filling in the arbitration field of the CAN-XL data frame using an initial priority identifier; update the arbitration field of the CAN-XL data frame with an updated priority identifier; use the updated priority identifier in the arbitration field of the CAN-XL data frame to determine whether the CAN-XL data frame gains access to the CAN-XL bus; and in response to the updated priority identifier in the arbitration field of the CAN-XL data frame being determined as indicative that the CAN-XL data frame gains access to the CAN-XL bus, send the CAN-XL data frame for transmission over the CAN-XL bus.

In some embodiments, the apparatus is configured to generate the CAN-XL data frame using a source data frame which is formatted differently from the CAN-XL data frame.

In some embodiments, the apparatus is configured to generate the CAN-XL data frame comprising a service data unit type, SDT, field, and wherein the apparatus is configured to fill in the SDT field of the CAN-XL data frame using a predetermined value associated with a type of the source data frame.

In some embodiments, the apparatus is configured to fill in the SDT field of the CAN-XL data frame using the predetermined value by: in response to the source data frame being an Ethernet data frame, setting the SDT field of the CAN-XL data frame as 0x05.

In some embodiments, the apparatus is configured to generate the CAN-XL data frame comprising a data length code, DLC, field; and wherein the apparatus is configured to fill in the DLC field of the CAN-XL data frame using a data length of the source data frame.

In some embodiments, the apparatus is configured to generate the CAN-XL data frame comprising an acceptance field, AF; and wherein the apparatus is configured to fill in the AF field of the CAN-XL frame using data selected from a destination address field of the source data frame.

In some embodiments, the apparatus is configured to fill in the AF field of the CAN-XL data frame using data selected from the destination address field of the source data frame by: in response to the destination field of the source data frame comprising first to sixth bytes of address data, filling in the AF field of the CAN-XL data frame using the first, second, third, and sixth bytes of address data of the destination address field of the source data frame.
In some embodiments, the apparatus is further configured to generate the CAN-XL data frame comprising a data field; and wherein the apparatus is configured to fill the source data frame into the data field of the CAN-XL data frame. In some embodiments, the apparatus is configured to fill in the arbitration field of the CAN-XL data frame using the initial priority identifier by determining a value of the initial priority identifier associated with a priority code value of the source data frame. In some embodiments, the apparatus is configured to update the arbitration filed of the CAN-XL data frame with the updated priority identifier by: determining a queued time of the CAN-XL data frame; and determining the updated priority identifier associated with the queued time.

The use of the terms "a" and "an" and "the" and similar referents in the context of describing the subject matter (particularly in the context of the following claims) are to be construed to cover both the singular and the plural, unless otherwise indicated herein or clearly contradicted by context. The terms "coupled" and "connected" both mean that there is an electrical connection between the elements being coupled or connected, and neither implies that there are no intervening elements. Recitation of ranges of values herein are intended merely to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims set forth hereinafter together with any equivalents thereof entitled to. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the disclosure as claimed.

Preferred embodiments are described herein, including the best mode known to the inventor for carrying out the claimed subject matter. Of course, variations of those preferred embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

## Claims

1. A method for communicating over a Controller Area Network Extended data-field Length, CAN-XL, bus, comprising:
generating a CAN-XL data frame comprising an arbitration field, the generating comprising filling in the arbitration field of the CAN-XL data frame using an initial priority identifier;
updating the arbitration field of the CAN-XL data frame with an updated priority identifier;
determining, using the updated priority identifier in the arbitration field of the CAN-XL data frame, whether the CAN-XL data frame gains access to the CAN-XL bus; and
in response to the updated priority identifier in the arbitration field of the CAN-XL data frame being determined as indicative that the CAN-XL data frame gains access to the CAN-XL bus, sending the CAN-XL data frame for transmission over the CAN-XL bus.

2. The method of claim 1, further comprising: receiving a source data frame; and wherein generating the CAN-XL data frame comprises generating the CAN-XL data frame using the source data frame.

3. The method of claim 2, wherein the CAN-XL data frame comprises a service data unit type, SDT, field; and wherein generating the CAN-XL data frame comprises filling in the SDT field of the CAN-XL data frame using a predetermined value associated with a type of the source data frame.

4. The method of claim 3, wherein filling in the SDT field of the CAN-XL data frame using the predetermined value comprises: in response to the source data frame being an Ethernet data frame, setting the SDT field of the CAN-XL data frame as 0x05.

5. The method of any of claims 2 to 4, wherein the CAN-XL data frame comprises a data length code, DLC, field; and wherein generating the CAN-XL data frame comprises filling in the DLC field of the CAN-XL data frame using a data length of the source data frame.

6. The method of any of claims 2 to 5, wherein the CAN-XL data frame comprises an acceptance field, AF; and wherein generating the CAN-XL data frame comprises filling in the AF field of the CAN-XL data frame using data selected from a destination address field of the source data frame.

7. The method of claim 6, wherein filling in the AF field of the CAN-XL data frame using data selected from the destination address field of the source data frame comprises: in response to the destination address field of the source data frame comprising first to sixth bytes of address data, filling in the AF field of the CAN-XL data frame using the first, second, third, and sixth bytes of address data of the destination address field of the source data frame.

8. The method of any of claims 2 to 7, wherein the CAN-XL frame comprises a data field, and wherein generating the CAN-XL data frame comprises filling the source data frame into the data field of the CAN-XL data frame.

9. The method of any of claims 2 to 8, wherein filling in the arbitration field of the CAN-XL data frame using the initial priority identifier comprises: determining a value of the initial priority identifier associated with a priority code value of the source data frame.

10. The method of any of claims 2 to 9, wherein updating the arbitration field of the CAN-XL data frame with the updated priority identifier comprises:
determining a queued time of the CAN-XL data frame; and
determining the updated priority identifier associated with the queued time.

11. An apparatus for communicating over a Controller Area Network Extended data-field Length, CAN-XL, bus, wherein the apparatus is configured to:
generate a CAN-XL data frame comprising an arbitration field, comprising filling in the arbitration field of the CAN-XL data frame using an initial priority identifier;
update the arbitration field of the CAN-XL data frame with an updated priority identifier;
use the updated priority identifier in the arbitration field of the CAN-XL data frame to determine whether the CAN-XL data frame gains access to the CAN-XL bus; and
in response to the updated priority identifier in the arbitration field of the CAN-XL data frame being determined as indicative that the CAN-XL data frame gains access to the CAN-XL bus, send the CAN-XL data frame for transmission over the CAN-XL bus.

12. The apparatus of claim 11, wherein the apparatus is configured to generate the CAN-XL data frame using a source data frame which is formatted differently from the CAN-XL data frame.

13. The apparatus of claim 12, wherein the apparatus is configured to generate the CAN-XL data frame comprising a service data unit type, SDT, field, and wherein the apparatus is configured to fill in the SDT field of the CAN-XL data frame using a predetermined value associated with a type of the source data frame.

14. The apparatus of claim 13, wherein the apparatus is configured to fill in the SDT field of the CAN-XL data frame using the predetermined value by: in response to the source data frame being an Ethernet data frame, setting the SDT field of the CAN-XL data frame as 0x05.

15. The apparatus of any of claims 12 to 14, wherein the apparatus is configured to generate the CAN-XL data frame comprising a data length code, DLC, field; and wherein the apparatus is configured to fill in the DLC field of the CAN-XL data frame using a data length of the source data frame.
